(19) Europäisches Patentamt
European Patent Office
Office européen des brevets

(11) Veröffentlichungsnummer: **0 274 120 B1**

(12) # EUROPÄISCHE PATENTSCHRIFT

(45) Veröffentlichungstag der Patentschrift: **11.11.92**

(51) Int. Cl.$^5$: **C22B 3/00**

(21) Anmeldenummer: **87119193.8**

(22) Anmeldetag: **24.12.87**

(54) **Verwendung von Phosphonoalkancarbonsäure-Partialestern zur Metallextraktion.**

(30) Priorität: **08.01.87 DE 3700326**

(43) Veröffentlichungstag der Anmeldung:
**13.07.88 Patentblatt 88/28**

(45) Bekanntmachung des Hinweises auf die Patenterteilung:
**11.11.92 Patentblatt 92/46**

(84) Benannte Vertragsstaaten:
**AT BE CH DE ES FR GB GR IT LI LU NL SE**

(56) Entgegenhaltungen:
**EP-A- 0 059 897**
**DE-B- 2 217 692**
**FR-A- 2 325 360**
**JP-A- 140 825**

**PATENT ABSTRACTS OF JAPAN - Band 9, Nr. 12 (C-2612)(1735) 18.01.81**

(73) Patentinhaber: **Henkel Kommanditgesellschaft auf Aktien**
**Postfach 1100 Henkelstrasse 67**
**W-4000 Düsseldorf-Holthausen(DE)**

(72) Erfinder: **Blum, Helmut**
**Bertha-von-Suttner-Strasse 30**
**W-4000 Düsseldorf 13(DE)**
Erfinder: **Schwab, Werner, Dr.**
**Bachstrasse 76**
**W-4018 Langenfeld(DE)**

**EP 0 274 120 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft die Verwendung von Phosphonoalkancarbonsäure-Partialestern und deren Mischungen zur Metallextraktion.

Die Fähigkeit bestimmter Phosphonalkancarbonsäuren, Komplexbildner für unterschiedliche Metallionen zu sein, ist aus dem Stand der Technik seit langem bekannt. Insbesondere wurden solche Phosphonoalkancarbonsäuren als gute Komplexbildner erkannt, die eine geminale Phosphat-/Carboxylat-Struktur besitzen, d.h. je eine Phosphonat- und Carboxylat-Gruppe an einem C-Atom der zentralen Alkyl- bzw. Alkylen-Kette tragen. Die mit derartige Phosphonoalkancarbonsäuren komplexierbaren Metallionen umfassen sowohl Metallionen der Hauptgruppen als auch der Nebengruppen des Periodensystems; insbesondere werden Erdalkalimetall- und Schwermetall-Ionen von Phosphonoalkancarbonsäuren komplexiert.

Aufgrund ihres guten Komplexiervermögens finden daher Phosphonoalkancarbonsäuren in speziellen Bereichen der Technik bevorzugte Anwendung. So wird beispielsweise 1,1-Diphosphonopropan-2,3-dicarbonsäure als Vehikel für Technetium ($^{99}Tc$) in der Skelettscintigraphie eingesetzt; 2-Phosphonobutan-1,2,4-tricarbonsäure dient als Sequestrier- und Thresholdmittel.

Verbindungen, die stabile Komplexe mit Metallen bilden, lassen sich zur Extraktion derartiger Metalle aus wäßrigen Lösungen heranziehen,wenn es gelingt, die Metallkomplexe der wäßrigen Lösung über ein Verteilungs-Gleichgewicht im Wege eines Extraktionsverfahrens zu entziehen. Für diesen Zweck werden üblicherweise unpolare organische Lösungsmittel oder Lösungsmittelgemische verwendet. Bestimmender Faktor für die Geschwindigkeit und Vollständigkeit des Extraktionsvorgangs ist das Lösungsvermögen der Aggregate aus Metallion und Komplexbildner im Extraktions-Lösungsmittel. Phosphonoalkancarbonsäuren sind aufgrund ihrer Polarität in den zur Extraktion verwendeten organischen Lösungsmitteln bekanntlicherweise nur schlecht löslich.

Aus dem Stand der Technik sind jedoch definierte Ester derartiger Phosphonoalkancarbonsäuren bekannt, deren Lösungsvermögen in organischen Lösungsmitteln befriedigend ist, die jedoch andererseits auch noch eine ausreichende Fähigkeit besitzen, bestimmte Metallionen zu komplexieren, und die sich demzufolge für die Extraktion bestimmter Metallionen aus wäßrigen Lösungen eignen.

So werden in der JP-A 140 825 und der JP-A 035 491 der Sakai Chemical Industries K.K. definierte, an den Carboxyl-Gruppen veresterte Triester der 2-Phosphonobutan-1,2,4-tricarbonsäure beschrieben, die in der Lage sind, aus sauren wäßrigen Lösungen mit Hilfe organischer Lösungsmittel bestimmte Metallionen zu einem hohen Prozentsatz zu extrahieren. Problematisch und damit nachteilig an dem in den genannten Druckschriften beschriebenen Extraktionsverfahren ist die Tatsache, daß nur die Carbonsäure-Vollester zur Extraktion verwendet werden können, deren gezielte Herstellung und Abtrennung aus den zur Herstellung verwendeten Reaktionsgemischen außerordentlich problematisch ist und eine hohen Syntheseaufwand erfordert; die - an sich bekannte und vom Verfahrensaufwand einfache - Veresterungsreaktion mit dem Ziel, hohe Ausbeuten eines Carbonsäure-Vollesters ohne Veresterung der Phosphonatgruppen zu erhalten, führt mit ökonomisch vertretbarem Aufwand an Ausgangsstoffen und zwischengelagerten Reinigungsoperationen nicht zum gewünschten Ziel.

Aufgabe der vorliegenden Erfindung war es, chemisch einfach zugängliche Verbindungen zur Verfügung zu stellen, mit deren Verwendung die Extraktionen bestimmter Metallionen aus sauren wäßrigen Lösungen einfach und in möglichst hoher Ausbeute gelingt. Zu bevorzugen waren in dem Fall solche Verbindungen und ihre Verwendung als Extraktanten bestimmter Metallionen, die hervorragende Lösungseigenschaften in organischen Lösungsmitteln und gute Komplexierbarkeit für unterschiedliche Metallionen zeigten.

Die Erfindung betrifft die Verwendung der bei der Umsetzung von Phosphonoalkancarbonsäuren der allgemeinen Formeln (I)

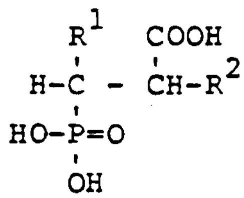

(I)

in der $R^1$ für COOH oder $PO_3H_2$ und $R^2$ für $CH_2COOH$ oder $PO_3H_2$ mit der Maßgabe stehen, daß $R^1$ und $R^2$ verschieden sind,

oder (II)

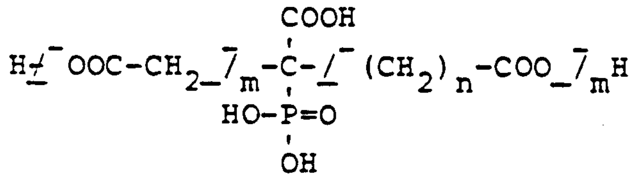 (II)

in der m für 0 oder 1 und n für 1 oder 2 stehen, mit Alkoholen der allgemeinen Formel (III)

$R^3$-OH (III)

in der $R^3$ für geradkettige oder verzweigte Alkylreste mit 4 bis 14 C-Atomen steht, im Molverhältnis 1 : 1 bis 1 : (p-0,5), wobei p die Wertigkeit der Phosphonoalkancarbonsäuren der allgemeinen Formeln (I) oder (II) ist, anfallenden Mischungen zur Extraktion von Metallionen aus sauren wäßrigen Lösungen mit Hilfe organische Lösungsmittel.

Die erfindungsgemäß verwendeten Produkte der Umsetzung von Phosphonoalkancarbonsäuren der allgemeinen Formeln (I) oder (II) mit Alkoholen der allgemeinen Formel (III) werden nach an sich bekannten Verfahren der Veresterung von Säuren mit Alkoholen hergestellt. Diese Verfahren umfassen die Umsetztung der Phosphonoalkancarbonsäuren der allgemeinen Formeln (I) oder (II) mit den Alkoholen der allgemeinen Formel (III) in Gegenwart oder in Abwesenheit eines Lösungsmittels bei erhöhten Temperaturen und gegebenenfalls unter erhöhtem Druck, wobei die Umsetzung - sofern erwünscht - auch unter einem Schutzgas durchgeführt werden kann. Die erhöhten Temperaturen liegen üblicherweise im Bereich zwischen 50 °C und dem Siedepunkt der verwendeten Lösungsmittels oder - sofern die Reaktion in Abwesenheit eines Lösungsmittels durchgeführt wird - zwischen 50 °C und dem Siedepunkt der beteiligen Reaktionspartner.

Sofern die Reaktion in Gegenwart eines Lösungsmittels durchgeführt wird, sind als Lösungsmittel die üblicherweise für eine Veresterungsreaktion verwendbaren Lösungsmittel einsetzbar. Solche Lösungsmittel sind beispielsweise aromatische Kohlenwasserstoffe, wie Benzol, Toluol, o-Xylol, m-Xylol oder p-Xylol, aliphatische Kohlenwasserstoffe, wie beispielsweise, Hexan, Heptan, Octan oder deren verzweigte Isomere, oder halogenierte Kohlenwasserstoffe wie beispielsweise Chlorbenzol, Tetrachlorkohlenstoff, Chloroform oder chlorierte Ethane. Bevorzugt werden für die Veresterungsreaktion solche Lösungsmittel verwendet, die in der Lage sind, als "Schlepper" des bei der Veresterungsreaktion gebildeten Wassers zu dienen. Als solche Lösungsmittel sind beispielsweise die oben genannten Xylole bekannt und geeignet.

Üblicherweise wird die Veresterungsreaktion in einem Reaktionsgefäß durchgeführt, das es gestatt die bei der Veresterungsreaktion gebildete Wassermenge über einen Wasserabscheider aus der Reaktion zu entfernen. Dies ermöglicht gleichzeitig auch, den Fortgang der Reaktion an der abgeschiedenen Wassermenge genau zu kontrollieren. Gegebenenfalls ist es auch möglich, die Veresterungsreaktionen in Gegenwart eines sauren Katalysators durchzuführen, wie für derartige Reaktionen allgemein bekannt ist. Als saure Katalysatoren können beispielsweise anorganische Mineralsäuren, organische Säuren wir beispielsweise aromatische Sulfonsäuren oder auch sogenannte Lewis-Säuren fungieren. Derartige Lewis-Säuren, wie beispielsweise Bortrifluorid, sind ebenfalls aus dem Stand der Technik für diesen Zweck bekannt.

Erfindungsgemäß werden zur Metallextraktion Umsetzungsprodukte von Phosphonoalkancarbonsäuren der oben genannten allgemeinen Formeln (I) oder (II) mit Alkoholen der allgemeinen Formel (III) verwendet. Dabei kommen in einer bevorzugten Ausführungsform Umsetzungsprodukte von Phosphonoalkancarbonsäuren der allgemeinen Formel (I) mit Alkoholen der allgemeinen Formel (III) oder Mischungen derartiger Umsetzungsprodukte zum Einsatz, wobei solche Umsetzungsprodukte oder deren Mischungen besonders bevorzugt sind, in denen als Phosphonalkancarbonsäure der allgemeinen Formel (I) 1,2-Diphosphonoethan-1,2-dicarbonsäure (PEDC) zum Einsatz kommt.

In einer anderen bevorzugten Ausführungsform werden Produkte der Umsetzung von Phosphonoalkancarbonsäuren der allgemeinen Formel (II) mit Alkoholen der allgemeinen Formel (III) oder Mischungen derartiger Umsetzungsprodukte verwendet, wobei von den Verwendungen dieser Umsetzungsprodukte (oder deren Mischungen) diejenigen besonders bevorzugt sind, in denen 2-Phosphonobutan-1,2,4-tricarbonsäure (PBTC) zum Einsatz kommt.

Neben den Produkten der Umsetzung der beiden besonders bevorzugten Phosphonoalkancarbonsäuren der oben genannten allgemeinen Formeln (I) oder (II) sind jedoch auch Umsetzungsprodukte anderer

Phosphonoalkancarbonsäuren der allgemeinen Formeln (I) oder (II) mit Alkoholen der allgemeinen Formel (III) verwendbar.

Als Umsetzungsprodukte von Phosphonoalkancarbonsäuren der allgemeinen Formel (I) mit Alkoholen der allgemeinen Formel (III) kommen beispielsweise Umsetzungsprodukte von 1-Phosphonopropan-1,2,3-tricarbonsäure (I; $R^1 = COOH$; $R^2 = CH_2\text{-}COOH$) oder von 1,1-Diphosphonopropan-2,3-dicarbonsäure (I: $R^1 = PO_3H_2$; $R^2 = CH_2\text{-}COOH$) mit Alkoholen der allgemeinen Formel (III) oder Mischungen derartiger Umsetzungsprodukte in Frage.

Erfindungsgemäß können auch als Produkte der Umsetzung von Phosphonoalkancarbonsäuren der allgemeinen Formel (II) mit Alkoholen der allgemeinen Formel (III) Umsetzungsprodukte von Phosphonoessigsäure (II; m = 0), oder von 2-Phosphonopropan-1,2,3-tricarbonsäure (II; m = 1, n = 1) mit Alkoholen der allgemeinen Formel (III) oder Mischungen derartiger Umsetzungsprodukte verwendet werden.

Hinsichtlich der Verwendung der Umsetzungsprodukte zur Metallextraktion sind diejenigen besonders bevorzugt, die aus einer der genannten Phosphonoalkancarbonsäuren der allgemeinen Formel (I) oder (II) mit Alkoholen der allgemeinen Formel (III)

$R^3$-OH (III)

entstehen, in der $R^3$ bevorzugterweise für verzweigte Alkylreste mit 4 bis 14 C-Atomen stehen kann, wenn nicht Mischungen derartiger Umsetzungsprodukte zum Einsatz kommen. Aus der genannten Gruppe der Umsetzungsprodukte werden besonders bevorzugt diejenigen verwendet, die aus der Umsetzung von Phosphonoalkancarbonsäuren der allgemeinen Formeln (I) oder (II) mit Alkoholen der allgemeinen Formel (III) resultieren, in der $R^3$ für verzweigte Alkylrest mit 6 bis 8 C-Atomen steht. Von den verzweigten Alkylresten aus der Gruppe Butyl, Pentyl, Hexyl, Heptyl, Octyl, Nonyl, Decyl, Undecyl, Dodecyl, Tridecyl und Tetradecyl sind also besonders diejenigen verzweigten Alkylreste bevorzugt, die aus der Gruppe Hexyl, Heptyl und Octyl stammen. Von der großen Zahl dieser verzweigten Isomere ist als besonders bevorzugt 2-Ethyl-hexyl zu nennen; Umsetzungsprodukte von Phosphonoalkancarbonsäuren der allgemeinen Formel (I) oder (II) mit Alkoholen der allgemeinen Formel (III), in der $R^3$ für 2-Ethyl-hexyl steht, werden mit besonderem Vorteil und sehr guter Wirkung gemäß der vorliegenden Erfindung verwendet. Derartige Umsetzungsprodukte zeigen nämlich eine ausgezeichnete Löslichkeit in den zur Extraktion verwendeten organischen Lösungsmitteln und besitzen ein hervorragendes Komplexiervermögen für eine Vielzahl von Metallionen, die aus sauren wäßrigen Lösungen abgetrennt werden sollen.

Entsprechend der Erfindung werden allgemein Umsetzungsprodukte von Phosphonoalkancarbonsäuren mit Alkoholen der oben genannten allgemeinen Formeln verwendet, die aus Umsetzungen der Säuren mit den Alkoholen in einem Molverhältnis von 1 : 1 bis 1 : (p-0,5) resultieren, wobei p die Wertigkeit der Phosphonoalkancarbonsäuren der allgemeinen Formeln (I) und (II) ist, wenn nicht Mischungen derartiger Umsetzungsprodukte verwendet werden. Unter "Wertigkeit" der Phosphonoalkancarbonsäuren der oben genannten allgemeinen Formeln wird die Zahle der Säure-Protonen der veresterbaren Carboxylgruppen und Phosphonsäure-Gruppen der Phosphonoalkancarbonsäuren verstanden. So ist beispielsweise die Wertigkeit (im oben definierten Sinne) der mit besonderem Vorzug verwendeten 1,2-Diphosphono-ethan-1,2-dicarbonsäure 6, wobei je zwei Säureprotonen den beiden Phosphonsäure-Gruppierungen und je ein Säureproton den beiden Carbonsäure-Gruppierungen zuzuordnen ist. Entsprechendes gilt für die anderen verwendbaren Phosphonoalkancarbonsäuren der allgemeinen Formeln (I) und (II). Für die soeben beschriebene PEDC kann also das Molverhältnis von Phosphonoalkancarbonsäure zu Alkohol der allgemeinen Formel (III) bei der Umsetzung zu den erfindungsgemäß verwendbaren Umsetzungsprodukten im Bereich von 1 : 1 bis 1 : 5,5 liegen. Für die Phosphonoalkancarbonsäuren mit einer niedrigeren Wertigkeit p (im Sinne der obigen Definition) liegt dann die obere Grenze des Molverhältnisses für die Bildung der Umsetzungsprodukte entsprechend niedriger und richtet sich nach der Zahl der für eine Veresterungsreaktion zur Verfügung stehend sauren Gruppierungen.

In bevorzugten Ausführungsformen der Erfindung werden Produkte von Umsetzungen der Phosphonoalkancarbonsäuren der allgemeinen Formeln (I) oder (II) mit Alkoholen der allgemeinen Formeln (III) verwendet, bei deren Herstellung durch Veresterung das Molverhältnis Säure : Alkohol im Bereich von 1 : 2 bis 1 : (q-1,5), besonders bevorzugt im Bereich von 1 : 2 bis 1 : (q-2,0) liegt, wobei q eine Wertigkeit bestimmter Phosphonoalkancarbonsäuren aus der obengennanten Gruppe größer oder gleich 4 ist. In Analogie zu der oben beschriebenen Verwendung können natürlich auch Mischungen derartiger Umsetzungsprodukte zum Einsatz kommen, bzw. verwendet werden. Erfindungsgemäß werden also bevorzugt Produkte der Umsetzung von Phosphonoalkancarbonsäure (wie beispielsweise PEDC) mit Alkoholen der allgemeinen Formel (III) verwendet, bei deren Herstellung durch Veresterung (für das Beispiel PEDC) das Molverhältnis Säure : Alkohol im Bereich von 1 : 2 bis 1 : 4,5, besonders bevorzugt im Bereich von 1 : 2 bis

1 : 4 liegt; wie oben beschrieben ist die Wertigkeit der PEDC gemäß der Definition 6. Entsprechend sind natürlich auch in diesem Beispiel Mischungen derartiger Umsetzungsprodukte der PEDC mit Alkoholen der allgemeinen Formel (III) verwendbar.

Erfindungsgemäß lassen sich die oben näher beschriebenen Umsetzungsprodukte, die allgemein als Partialester der Phosphonoalkancarbonsäuren der allgemeinen Formeln (I) oder (II) beschrieben werden können, zur Extraktion einer Vielzahl von Metallionen aus sauren wäßrigen Lösungen verwenden. Überraschend zeigte sich, daß die Verwendung der Partialester besonders gute Erfolge aufweist, wenn aus sauren wäßrigen Lösungen Ionen von Erdalkalimetallen oder Schwermetallen extrahiert werden sollen. Entsprechend der erfindungsgemäßen Verwendung sind besonders gute Ergebnisse bei der Extraktion von Metallionen aus sauren wäßrigen Lösungen zu erzielen, die aus der Gruppe Eisen, Cobalt, Nickel, Kupfer, Zink, Antimon und Bismut stammen. Die besten Ergebnisse wurden überraschend für Eisen-, Antimon- und Bismutionen erzielt. Dabei wurde einerseits gefunden, daß diese Ionen zu einem sehr hohen Prozentsatz aus den vorgegebenen sauren wäßrigen Lösungen extrahiert werden konnten, andererseits zeigte sich, daß auch sehr kleine Mengen derartiger Ionen aus sauren wäßrigen Lösungen extrahiert werden konnten, wenn diese kleinen Mengen neben großen Mengen anderer Ionen in der zu extrahierenden sauren wäßrigen Lösung vorlagen. Dies zeigt eine hohe Spezifität der Partialester der oben beschriebenen Phosphonoalkancarbonsäuren für die Extraktion gerade dieser Schwermetall-Ionen.

Die pH-Wert der zu extrahierenden, sauren wäßrigen Lösungen können über einen großen Bereich des sauren pH-Wert-Bereichs schwanken, wobei zu betonen ist, daß die Verwendung der Phosphonoalkancarbonsäuren-Partialester zu einer besonders hohen Spezifität für die Extraktion eines bestimmen Metallions führen kann, wenn während des Extraktions-Vorgangs ein bestimmter pH-Wert eingehalten wird. Insgesamt kann der pH-Wert der zu extrahierenden wäßrigen Lösung über den Bereich von 0 bis 7 schwanken. Die Extraktion bestimmter Metallionen läßt sich beispielsweise besser im pH-Wert-Bereich zwischen 0 und 1,5 durchführen (beispielsweise Antimon und Bismut sowie Eisen). Im Gegensatz dazu lassen sich andere Ionen, wie beispielsweise Cobalt, Nickel oder Zink bei höheren pH-Werten, beispielsweise bei einem pH-Wert von 3, unter Verwendung der erfindungsgemäßen Phosphonoalkancarbonsäure-Partialester extrahieren.

Unter Verwendung der Umsetzungsprodukte der Phosphonoalkancarbaonsäuren der allgemeinen Formeln (I) und (II) mit Alkoholen der allgemeinen Formel (III) oder deren Mischungen gemäß der Erfindung lassen sich die Metallionen mit Hilfe organischer Lösungsmittel extrahieren. Die in Frage kommenden organischen Lösungsmittel sind für die Metallextraktion an sich aus dem Stand der Technik bekannt. Bevorzugt kommen organische Lösungsmittel oder deren Gemische aus der Gruppe geradkettige und verzweigte Alkane und Alkene mit 6 bis 12 C-Atomen, aromatische Kohlenwasserstoffe und halogenierte Kohlenwasserstoffe zum Einsatz, wobei davon bevorzugt Lösungsmittelgemische verschiedener, bei Raumtemperatur flüssiger Alkane mit 6 bis 12 C-Atomen verwendet werden. Derartige Lösungsmittelgemische sind kommerziell erhältlich und werden beispielsweise unter den Namen Solvesso$^R$ une Escaid$^R$ vertrieben.

Die Erfindung wird durch die nachfolgenden Beispiele näher erläutert.

## Beispiel 1

Beispielhafte Herstellung des Produktes einer Umsetzung einer Phosphonoalkancarbonsäure der allgemeinen Formel (I) mit einem Alkohol der allgemeinen Formel (III)

1 Mol 1,2-Diphosphonoethan-1,2-dicarbonsäure-dihydrat wurde in 1000 ml Xylol suspendiert und mit 4 Mol Ethylhexanol versetzt. Die Mischung wurde auf 150 °C erwärmt und das abgespaltene Hydrat - bzw. Reaktionswasser - laufend über einen Wasserabscheider aus der Reaktion entfernt. Nach 7 bis 8 h war die berechnete Menge Wasser (6 Mol) abgetrennt. Es wurde annähernd 1 Mol 1,2-Diphosphonoethan-1,2-dicarbonsäure-tetrakis (2-ethyl-hexylester) erhalten; Sz: 145 (berechnet: 155).

Durch völlig analoge Umsetzung wurde bei Verwendung von n-Octanol als Alkohol der allgemeinen Formel (III) der entsprechende 1,2-Diphosphonoethan-1,2-dicarbonsäure-tetrakis(2-n-octylester) erhalten.

Unter Verwendung von 5 Mol Ethylhexanol wurde durch völlig analoge Umsetzung der entsprechende 1,2-Diphosphonoethan-1,2-dicarbonsäure-penta(2-ethylhexylester) erhalten; bei Verwendung von 6 Mol Ethylhexanol bildete sich der (erfindungsgemäß nicht verwendbare) entsprechende Hexa(2-ethylhexylester) (siehe Vergleichsbeispiel 1).

## Beispiel 2

Beispielhafte Herstellung eines Produktes der Umsetzung einer Phosphonoalkancarbonsäure der allgemeinen Formel (II) mit einem Alkohol der allgemeinen Formel (III)

1 Mol einer 87 %igen wäßrigen Lösung von 2-Phosphonobutan-1,2,4-tricarbonsäure (PBTC) wurde auf 70 ° C erwärmt. Unter kräftigem Rühren wurden anschließend 2 Mol Ethylhexanol eingetropft. Die Reaktionsmischung wurde 23 Stunden lang auf 70 ° C gehalten.

Die Säurezahl der erhaltenen Reaktionsmischung war 255 (berechnet: 295). Nach NMR-spektroskopischen Untersuchungen lagen 80 % des im Zuge der Umsetzung gebildeten 2-Phosphonobutan-1,2,4-tricarbonsäure-bis(2-ethylhexylesters) als Dicarboxylat (Veresterung an zwei Carbonsäuregruppierungen), 14 % als geminales Monophosphonat-Carboxylat (Veresterung einer Phosphonatgruppen und einer Carboxylatgruppe, die am C-Atom zwei gebunden sind) und 6 % als Diphosphonat (Veresterung beider Phosphonat-Gruppierungen) vor.

In völlig analoger Weise lassen sich durch Variation des Molverhältnisses Phosphonocarbonsäure : Alkohol entsprechende Mono-, Tri- oder Tetraester der 2-Phosphonobutan-1,2,4-tricarbonsäure darstellen.

Ein Vollester (Pentaester) der PBTC wurde durch analoge Umsetzung der Phosphonoalkancarbonsäure mit 2-Ethylhexanol im Molverhältnis 1 : 1 und anschließende Umsetzung mit einem großen Überschuß Methanol erhalten; es entstand der 2-Phosphonobutan-1,2,4-tricarbonsäure(2-ethylhexyl-)tetramethylester (Vergleichsbeispiel 2).

Durch Variation der Alkohole lassen sich auch entsprechende andere Ester der PBTC darstellen.

Partialester bzw. Vollester anderer Phosphonoalkancarbonsäuren der oben genannten allgemeinen Formeln (I) und (II) wurden auf völlig gleiche Art und Weise dargestellt.

Die für die nachfolgenden Beispiele der Solvent-Extraktion verwendeten, Metallionen enthaltenden Lösungen wurden dadurch hergestellt, daß Metallsulfate in Wasser gelöst wurden. Der für die Extraktion gewünschte pH-Wert wurde anschließend durch Zusatz von $H_2SO_4$ eingestellt.

Es wurden folgende wäßrige Elektrolytlösungen hergestellt:

Lösung (a):

| | |
|---|---|
| Gehalt an Kupfer: | 2,0 g/l; |
| Gehalt an Nickel: | 2,9 g/l; |
| Gehalt an Cobalt: | 3,0 g/l; |
| Gehalt an Zink: | 3,3 g/l und |
| Gehalt an Eisen: | 2,8 g/l. |

Die pH-Werte für die Extraktion der einzelnen Metallionen betrugen:
pH 1,5 für die Extraktion von Kupfer und Eisen und
pH 3,0 für die Extraktion von Nickel, Cobalt und Zink.

Lösung (b):

| | |
|---|---|
| Gehalt an Eisen: | 2,0 g/l; |
| Gehalt an Antimon: | 0,3 bis 0,5 g/l und |
| Gehalt an Bismut: | 0,3 bis 0,5 g/l. |

Gesamtgehalt an Schwefelsäure: 180 bis 250 g/l.

Die entsprechend den obigen Angaben zusammengesetzten sauren, wäßrigen Elektrolytlösungen wurden mit 0,1 m Lösungen der in den folgenden Beispielen angegebenen Partialester der Phosphonoalkancarbonsäure in organischen Lösungsmitteln kontaktiert, wobei das Volumenverhältnis organische Phase : anorganische Phase in allen Fällen 1 : 1 betrug. Die Extraktion erfolgte in einem einstufigen Schüttelversuch; die Schüttelzeit betrug 1 Stunde, wobei Raumtemperatur eingehalten wurde. Die Ergebnisse der Extraktion sind der nachfolgenden Tabelle zu entnehmen, wobei die Extraktionswerte der einzelnen Metallionen in %, bezogen auf den Ausgangsgehalt an Metallionen in den obengenannten Elektrolytlösungen (a) und (b), angegeben sind.

Beispiel 3

Extraktion mit Partialestern der 1,2-Diphosphonoethan-1,2-dicarbonsäure (PEDC)

a) Extraktion mit PEDC-tetra(n-octylester); organisches Lösungsmittel: Escaid$^R$ 100.
b) Extraktion mit PEDC-tetra(2-ethylhexylester); Lösungsmittel: Escaid$^R$ 100.
c) Extraktion mit PEDC-penta(2-ethylhexylester); Lösungsmittel: Escaid$^R$ 100.

Vergleichsbeispiel 1

a) Extraktion mit PEDC-hexa(2-ethylhexylester); Lösungsmittel: Escaid^R 100.
b) Extraktion mit PEDC-tetra(n-dodecylester); Lösungsmittel: Escaid^R 100.
Die Ergebnisse der Extraktionsversuche sind der nachfolgenden Tabelle 1 zu entnehmen.

Tabelle 1

Extraktion mit Partialestern der PEDC

| | Extraktion von (in %) | | | | | | | |
|---|---|---|---|---|---|---|---|---|
| | Lösung (a) | | | | | Lösung (b) | | |
| Bsp. | Cu | Ni | Co | Zn | Fe | Fe | Bi | Sb |
| 3a | F[1)] | F[1)] | 67 | F[1)] | 85 | 68 | 62 | 67 |
| 3b | 100 | 57 | 67 | 73 | 100 | 67 | 100 | 88 |
| 3c | 50 | 27 | 33 | 46 | 71 | 35 | 10 | 52 |
| Vgl. 1a | 10 | 13 | 7 | 19 | 42 | 10 | 0 | 0 |
| Vgl. 1b | Emulsionsbildung | | | | | Emulsionsbildung | | |

Anmerkung: 1) F = Fällung

Ergebnis

Wie Tabelle 1 zu entnehmen ist, zeigt der Tetra-(2-ethylhexylester) der PEDC (Beispiel 3b) ein optimales Extraktionsverhalten; das Extraktionsvermögen des entsprechenden Pentaesters (Beispiel 3c) ist bereits deutlich schlechter und der Vollester (Hexaester; Vergleichsbeispiel 1a) zeigt ein unzureichendes Extraktionsverhalten. In allen Fällen wurden Mischungen der jeweiligen Ester eingesetzt, die an den unterschiedlich möglichen sauren Gruppierungen verestert waren.

Ensprechend Beispiel 3a zeigen Partialester, die aus der Umsetzung der Phosphonoalkancarbonsäure mit geradkettigen Alkylresten entstehen, ein deutlich schlechteres Extraktionsverhalten als verzweigtkettige Umsetzungsprodukte: es wurden unerwünschte Fällungen bzw. Emulsionsbildungen beobachtet, welche ihre Ursache in der ungenügenden Löslichkeit des Partialesters selbst oder seiner Metallkomplexe haben.

Beispiel 4

Partialester der 2-Phosphonobutan-1,2,4-tricarbonsäure (PBTC):

a) PBTC-mono(n-hexylester); Lösungsmittel: Kerosin.
b) PBTC-mono(2-ethylhexylester); Lösungsmittel: Kerosin.
c) PBTC-di(n-hexylester); Lösungsmittel: Solvesso^R 150/10 Vol. % i-Decanol.
d) PBTC-di-(2-ethylhexylester); Lösungsmittel: Solvesso^R 150.

Vergleichsbeispiel 2

Extraktion mit PBTC-mono(2-ethylhexyl-)tetramethylester (Vollester); Lösungsmittel: Solvesso^R 150.

Die Ergebnisse der Extraktionsversuche sind der nachfolgenden Tabelle 2 zu entnehmen.

Tabelle 2

Extraktion mit Partialestern der PBTC

| | Extraktion von (in %) | | | | | | | |
|---|---|---|---|---|---|---|---|---|
| | Lösung (a) | | | | | Lösung (b) | | |
| Bsp. | Cu | Ni | Co | Zn | Fe | Fe | Bi | Sb |
| 4a | Partialester nicht kerosinlöslich | | | | | | | |
| 4b | Partialester nicht kerosinlöslich | | | | | | | |
| 4c | 25 | 19 | 10 | 19 | 83 | 32 | 35 | 88 |
| 4d | 35 | 23 | 27 | 27 | 83 | 25 | 14 | 74 |
| Vgl. 2 | 0 | 0 | 3 | 0 | 8 | keine Extraktion | | |

Ergebnis

Diester der PBTC zeigen sowohl in stark saurer als auch in normalsaurer wäßriger Lösung ein gutes Extraktionsverhalten, wobei das des Diesters mit verzweigter $C_8$-Gruppierung besser ist als das des unverzweigten Derivats. Die 1 : 1-Umsetzungsprodukte sind - da nicht im organischen Lösungsmittel löslich - zur Extraktion nicht geeignet. Der Vollester der PBTC (Vergleichsbeispiel 2) extrahiert in starksaurer Lösung gar nicht, in mäßig saurer Lösung nur unbefriedigend.

Beispiel 5

Extraktion mit anderen Partialestern von Phosphonoalkancarbosäuren

a) 1,1-Diphosphonopropan-2,3-dicarbonsäure (DPD)-tri-(2-ethylhexylester);Lösungsmittel: Escaid$^R$ 100.
b) Phosphonoessigsäure (PESE)-mono(2-ethylhexylester); Lösungsmittel: Solvesso$^R$ 150/10 Vol. % i-Decanol.
c) Phosphonoessigsäure-di-(2-ethylhexylester); Lösungsmittel: Escaid$^R$ 100.

Vergleichsbeispiel 3

Extraktion mit 1-Phosphonopropan-1,2,3-tricarbonsäure-penta(2-ethylhexylester) (Vollester der PPTC).

Die Ergebnisse der Extraktion mit den Estern der Beispiele 5 und Vergleichsbeispiel 3 sind der nachfolgenden Tabelle 3 zu entnehmen.

Tabelle 3

Extraktion mit Partialestern der DPD und PESE

| | Extraktion von (in %) | | | | | | | |
|---|---|---|---|---|---|---|---|---|
| | Lösung (a) | | | | | Lösung (b) | | |
| Bsp. | Cu | Ni | Co | Zn | Fe | Fe | Bi | Sb |
| 5a | 72 | 55 | 67 | 67 | 100 | 100 | - | 61 |
| 5b | 23 | 6 | 7 | 21 | F[1)] | | F[1)] | |
| 5c | 20 | 10 | 13 | 41 | 64 | 70 | 0 | 0 |
| Vgl. 3 | 0 | 0 | 0 | 15 | 32 | 5 | 0 | 29 |

Anmerkung: [1)] F = Fällung

**Patentansprüche**

1. Verwendung der bei der Umsetzung von Phosphonoalkancarbonsäuren der allgemeinen Formeln (I)

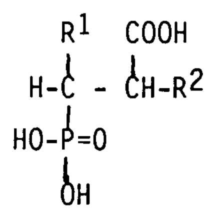

(I)

in der $R^1$ für COOH oder $PO_3H_2$ und $R^2$ für $CH_2COOH$ oder $PO_3H_2$ mit der Maßgabe stehen, daß $R^1$ und $R^2$ verschieden sind, oder (II)

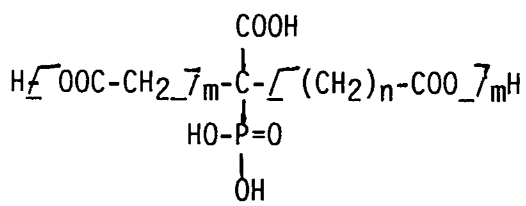

(II)

in der m für 0 oder 1 und n für 1 oder 2 stehen,
mit Alkoholen der allgemeinen Formel (111)

$R^3$-OH (111)

in der $R^3$ für geradkettige oder verzweigte Alkylreste mit 4 bis 14 C-Atomen steht, im Molverhältnis 1 : 1 bis 1 (p-0,5), wobei p die Wertigkeit der Phosphonoalkancarbonsäuren der allgemeinen Formeln (I) oder (II) ist, anfallenden Mischungen zur Extraktion von Metallionen aus sauren wäßrigen Lösungen mit Hilfe organischer Lösungsmittel.

2. Verwendung nach Anspruch 1, dadurch gekennzeichnet, daß Umsetzungsprodukte von Phosphonoalkancarbonsäuren der allgemeinen Formel (I) mit Alkoholen der allgemeinen Formel (III) oder Mischungen derartiger Umsetzungsprodukte zum Einsatz kommen.

**3.** Verwendung nach Anspruch 2, dadurch gekennzeichnet, daß Umsetzungsprodukte von 1,2-Diphosphonoethan-1,2-dicarbonsäure mit Alkoholen der allgemeinen Formel (III) oder Mischungen derartiger Umsetzungsprodukte zum Einsatz kommen.

**4.** Verwendung nach Anspruch 1, dadurch gekennzeichnet, daß Umsetzungsprodukte von Phosphonoalkancarbonsäuren der allgemeinen Formel (II) mit Alkoholen der allgemeinen Formel (III) oder Mischungen derartiger Umsetzungsprodukte zum Einsatz kommen.

**5.** Verwendung nach Anspruch 4, dadurch gekennzeichnet, daß Umsetzungsprodukte von 2-Phosphonobutan-1,2,4-tricarbonsäure mit Alkoholen der allgemeinen Formel (III) oder Mischungen derartiger Umsetzungsprodukte zum Einsatz kommen.

**6.** Verwendung nach Ansprüchen 1 bis 5, dadurch gekennzeichnet, daß Umsetzungsprodukte der Phosphonoalkancarbonsäuren mit Alkoholen der allgemeinen Formel (III), in der $R^3$ für verzweigte Alkylreste mit 4 bis 14 C-Atomen steht, oder Mischungen derartiger Umsetzungsprodukte zum Einsatz kommen.

**7.** Verwendung nach Anspruch 6, dadurch gekennzeichnet, daß Umsetzungsprodukte der Phosphonoalkancarbonsäuren mit Alkoholen der allgemeinen Formel (III), in der $R^3$ für verzweigte Alkylreste mit 6 bis 8 C-Atomen steht, oder Mischungen derartiger Umsetzungsprodukte zum Einsatz kommen.

**8.** Verwendung nach Ansprüchen 6 und 7, dadurch gekennzeichnet, daß Umsetzungsprodukte der Phosphonoalkancarbonsäuren mit Alkoholen der allgemeinen Formel (III), in der $R^3$ für einen 2-Ethylhexyl-Rest steht, oder Mischungen derartiger Umsetzungsprodukte zum Einsatz kommen.

**9.** Verwendung nach Ansprüchen 1 bis 8, dadurch gekennzeichnet, daß Produkte der Umsetzung der Phosphonoalkancarbonsäuren mit den Alkoholen im Molverhältnis 1 : 2 bis 1 : (q-1,5), bevorzugt im Molverhältnis 1 : 2 bis 1 : (q-2,0), wobei q die Wertigkeit 4 der Phosphonoalkancarbonsäuren der allgemeinen Formeln (I) oder (II) ist, oder Mischungen derartiger Umsetzungsprodukte zum Einsatz kommen.

**10.** Verwendung nach Ansprüchen 1 bis 9, dadurch gekennzeichnet, daß die Produkte der Umsetzung der Phosphonoalkancarbonsäuren mit den Alkoholen zur Extraktion von Metallionen aus der Gruppe der Erdalkalimetalle und der Schwermetalle zum Einsatz kommen.

**11.** Verwendung nach Anspruch 10, dadurch gekennzeichnet, daß die Umsetzungsprodukte zur Extraktion von Metallionen aus der Gruppe Eisen, Cobalt, Nickel, Kupfer, Zink, Antimon und Bismut zum Einsatz kommen.

**12.** Verwendung nach Ansprüchen 1 bis 11, dadurch gekennzeichnet, daß die pH-Werte der sauren wäßrigen Lösungen zur Extraktion der Metallionen im Bereich von 0 bis 7 liegen.

**13.** Verwendung nach Ansprüchen 1 bis 12, dadurch gekennzeichnet, daß als oranische Lösungsmittel Lösungsmittel aus der Gruppe geradkettige und verzweigte Alkane und Alkene mit 6 bis 12 C-Atomen, aromatische Kohlenwasserstoffe und halogenierte Kohlenwasserstoffe oder deren Gemische zum Einsatz kommen.

## Claims

**1.** The use of the mixtures formed in the reaction of phosphonoalkanecarboxylic acids corresponding to general formula (I)

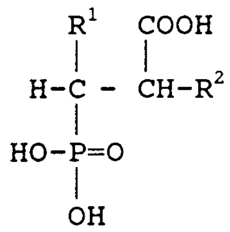

(I)

in which $R^1$ represents COOH or $PO_3H_2$ and $R^2$ represents $CH_2COOH$ or $PO_3H_2$, with the proviso that $R^1$ and $R^2$ are different,
or to the following general formula

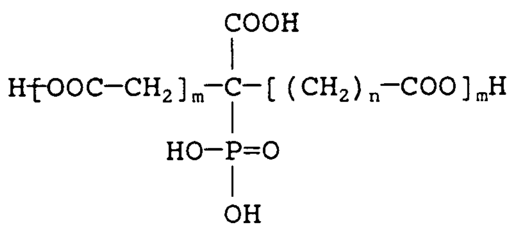

(II)

in which m = 0 or 1 and n = 1 or 2,
with alcohols corresponding to the following general formula

$R^3$-OH (III)

in which $R^3$ represents linear or branched $C_{4-14}$ alkyl radicals,
in a molar ratio of 1:1 to 1:(p-0.5), where p is the valency of the phosphonoalkanecarboxylic acids corresponding to general formula (I) or (II), for the extraction of metal ions from acidic aqueous solutions using organic solvents.

**2.** The use claimed in claim 1, characterized in that reaction products of phosphonoalkanecarboxylic acids corresponding to general formula (I) with alcohols corresponding to general formula (III) or mixtures of such reaction products are used.

**3.** The use claimed in claim 2, characterized in that reaction products of 1,2-diphosphonoethane-1,2-dicarboxylic acid with alcohols corresponding to general formula (III) or mixtures of such reaction products are used.

**4.** The use claimed in claim 1, characterized in that reaction products of phosphonoalkanecarboxylic acids corresponding to general formula (II) with alcohols corresponding to general formula (III) or mixtures of such reaction products are used.

**5.** The use claimed in claim 4, characterized in that reaction products of 2-phosphonobutane-1,2,4-tricarboxylic acid with alcohols corresponding to general formula (III) or mixtures of such reaction products are used.

**6.** The use claimed in claims 1 to 5, characterized in that reaction products of phosphonoalkanecarboxylic acids with alcohols corresponding to general formula (III), in which $R^3$ represents branched $C_{4-14}$ alkyl radicals, or mixtures of such reaction products are used.

**7.** The use claimed in claim 6, characterized in that reaction products of phosphonoalkanecarboxylic acids with alcohols corresponding to general formula (III), in which $R^3$ represents branched $C_{6-8}$ alkyl radicals, or mixtures of such reaction products are used.

8. The use claimed in claims 6 and 7, characterized in that reaction products of phosphonoalkanecarboxylic acids with alcohols corresponding to general formula (III), in which $R^3$ represents a 2-ethylhexyl radical, or mixtures of such reaction products are used.

9. The use claimed in claims 1 to 8, characterized in that reaction of products of phosphonoalkanecarboxylic acids with the alcohols in a molar ratio of 1:2 to 1:(q-1.5) and preferably in a molar ratio of 1:2 to 1:-(q-2.0) where q is the valency 4 of the phosphonoalkanecarboxylic acids corresponding to general formula (I) or (II), or mixtures of such reaction products are used.

10. The use claimed in claims 1 to 9, characterized in that the reaction products of phosphonoalkanecarboxylic acids with alcohols are used for the extraction of metal ions from the group of alkaline earth metals and heavy metals.

11. The use claimed in claim 10, characterized in that the reaction products are used for the extraction of metal ions from the group consisting of iron, cobalt, nickel, copper, zinc, antimony and bismuth.

12. The use claimed in claims 1 to 11, characterized in that the pH values of the acidic aqueous solutions for the extraction of the metal ions are in the range from 0 to 7.

13. The use claimed in claims 1 to 12, characterized in that the organic solvents used are solvents from the group consisting of straight-chain and branched-chain $C_{6-12}$ alkanes and alkenes, aromatic hydrocarbons and halogenated hydrocarbons or mixtures thereof.

**Revendications**

1. Utilisation des mélanges provenant de la réaction des acides phosphonoalcanecarboxyliques de la formule générale (I)

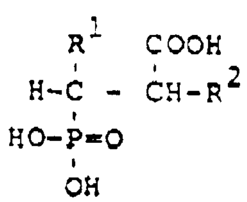

(I)

dans laquelle $R^1$ représente COOH ou $PO_3H_2$ et $R^2$ représente $CH_2COOH$ ou $PO_3H_2$, avec pour condition que $R^1$ et $R^2$ sont différents, ou (II)

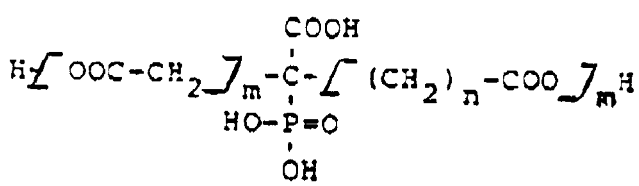

(II)

dans laquelle m représente 0 ou 1 et n représente 1 ou 2, avec des alcools de la formule générale (III)

$R^3$-OH (III)

dans laquelle $R^3$ représente un radical alkyle linéaire ou ramifié ayant de 4 à 14 atomes de carbone, avec un rapport molaire allant de 1:1 à 1:(p-0,5), où p représente la valence des acides phosphonoalcanecarboxyliques des formules générales (I) ou (II) en vue de l'extraction des tons métalliques des solutions aqueuses acides à l'aide de solvants organiques.

2. Utilisation selon la revendication 1, caractérisée en ce qu'on utilise les produits de la réaction des

acides phosphonoalcanecarboxyliques de la formule générale (I) avec les alcools de la formule générale (III) ou les mélanges de ces produits de réaction.

**3.** Utilisation selon la revendication 2, caractérisée en ce qu'on utilise les produits de la réaction de l'acide 1,2-diphosphonoéthane-1,2-dicarboxylique avec les alcools de la formule générale (III) ou las mélanges de ces produits de réaction.

**4.** Utilisation selon la revendication 1, caractérisée en ce qu'on utilise les produits de réaction des acides phosphonoalcanecarboxyliques de la formule générale (II) avec les alcools de la formule générale (III) ou les mélanges de ces produits de réaction.

**5.** Utilisation selon la revendication 4, caractérisée en ce qu'on utilise les produits de réaction de l'acide 2-phosphonobutane-1,2,4-tricarboxylique avec les alcools de la formule générale (III) ou les mélanges de ces produits de réaction.

**6.** Utilisation selon les revendications 1 à 5, caractérisée en ce qu'on utilise les produits de réaction des acides phosphonoalcanecarboxyliques avec les alcools de la formule générale (III), dans laquelle $R^3$ représente un radical alkyle ramifié ayant de 4 à 14 atomes de carbone ou les mélanges de ces produits de réaction.

**7.** Utilisation selon la revendication 6, caractérisée en ce qu'on utilise les produits de réaction des acides phosphonoalcanecarboxyliques avec les alcools de la formule générale (III), dans laquelle $R^3$ représente un radical alkyle ramifié ayant de 6 à 8 atomes de carbone ou las mélanges de ces produits de réaction.

**8.** Utilisation selon les revendication 6 et 7, caractérisée en ce qu'on utilise les produits de réaction des acides phosphonoalcanecarboxyliques avec les alcools de la formule générale (III), dans laquelle $R^3$ représente un radical 2-éthylhexylique ou des mélanges de ces produits de réaction.

**9.** Utilisation selon les revendication 1 à 8, caractérisée, en ce qu'on utilise les produits de réaction des acides phosphonoalcanecarboxyliques avec les alcools suivant un rapport molaire compris entre 1:1 et 1:(q-1,5), et de préférence avec un rapport molaire compris entre 1:2 et 1:(q-2,0),où q représente la valence 4 des acides phosphonoalcanecarboxyliques de la formule générale (I) ou (II) ou les mélanges de ces produits de réaction.

**10.** Utilisation selon les revendication 1 à 9, caractérisée en ce qu'on utilise les produits de réaction des acides phosphonoalcanecarboxyliques avec les alcools en vue de l'extraction des ions métalliques provenant du groupe des métaux alcalino-terreux et des métaux lourds.

**11.** Utilisation selon la revendication 10 , caractérisée en ce qu'on utilise les produits de réaction en vue de l'extraction des ions métalliques provenant du groupe du fer, du cobalt, du nickel, du cuivre, du zinc, de l'antimoine et du bismuth.

**12.** Utilisation selon les revendications 1 à 11, caractérisée en ce que la valeur du pH des solutions aqueuses acides pour l'extraction des ions métalliques est comprise dans la gamme de 0 à 7.

**13.** Utilisation selon les revendications 1 à 12, caractérisée en ce qu'on utilise comme solvants organiques des solvants choisis dans le groupe des alcanes et des alcènes à chaîne linéaire et ramifiée ayant de 6 à 12 atomes de carbone, des hydrocarbures aromatiques et des hydrocarbures halogénés ou de leurs mélanges.